# EUROPEAN PATENT SPECIFICATION

(11) **EP 0 712 613 B1**
(45) Date of publication and mention of the grant of the patent: **23.01.2002**
(21) Application number: 95830428.9
(22) Date of filing: 12.10.1995
(51) Int. Cl.: A61C 13/265

(54) **Attachment for removable dental prosthesis**
Geschiebe für entfernbare zahnärztliche Prothese
Attachement pour prothèse dentaire amovible

(30) Priority: 21.10.1994 IT FI940195
(43) Date of publication of application: 22.05.1996
(73) Proprietor: Boesmi, Natalino, 57100 Livorno (IT)
(72) Inventor: Boesmi, Natalino, 57100 Livorno (IT)
(74) Representative: Mannucci, Gianfranco, Dott.-Ing.

(56) References cited:
- WO-A-92/10977
- DE-A- 3 522 605
- US-A- 5 098 295
- US-A- 5 211 561

## Description

The invention relates to an attachment for removable dental prosthesis, of the type comprising a first so-called male element, anchored to the pier tooth, and a second so-called female element fastened to the removable prosthesis.

In the field of dental prosthetics the need frequently arises to produce partial dental prostheses which have to be removable, i.e. which can be fastened to and unfastened from the respective dental arch, in which there are one or more teeth which are employed as piers (possibly made ready for crowning); a first element of the joining contrivance, in practice the male part, is anchored to the pier tooth or teeth. The second element of the contrivance (the female part), which is integral with the removable prosthesis, can be fastened to this first element and unfastened from it.

There are currently many types of attachments for prostheses of this sort. These attachments must have the following two mechanical characteristics: they must firstly provide support and a stable linkage between prosthesis and pier tooth; and secondly they must provide a linkage which can be easily and frequently unfastened by the user himself.

Most of the attachments currently known consist of dovetail or T couplings, with a restraining effect (retention) obtained by spheres with springs or with a section made with a central cutout with a retentive function. However, springs, spheres, punches or cutouts suffer deterioration under the forces of mastication, as a result of which they lose effectiveness after a certain time. Moreover, these types of attachments are expensive and complex to produce as they require a plurality of operations and high accuracy.

From WO-A-9210977 an attachment is known comprising a first male element anchored to a pier tooth; and a second female element which is integral with the removable prosthesis; a seat in said second element for the insertion of a component of said first element; and an elastic retention system with a restraining member connecting the first element to the second element. In this known device the restraining member is formed by a flexible wall of the seat into which the component of the first element is inserted.

From DE-A-3522605 an attachment is known, wherein the first element has a resilient mail component which is introduced into a seat formed in the second component.

Also the two last indicated attachments have the drawbacks mentioned above.

The subject of the invention is an attachment of the type mentioned above which does not exhibit these drawbacks. In particular, the object of the invention is to produce an attachment for joining a removable prosthesis, which attachment provides a stable and secure anchorage while simultaneously allowing easy and frequent removal of the prosthesis by the user, as well as easy replaceability of the elastic member.

Another object of the invention is to produce an attachment of simple shape and such as can be made with a minimum number of mechanical operations.

In particular, the invention also allows the production of the male part by moulding in a sublimable (calcinable) resin, thereby to obtain directly by casting the supporting element with the male part already made. The same principle can be used for the female part. It is evident that the use of this system avoids the welding which would be necessary if the components were constructed mechanically.

Another optional object is to produce a prosthesis which is able to be springy.

These and other objects, which will become clear to those skilled in the art from reading the following text, are achieved with an attachment according to claim 1.

The attachment in question is intended for a removable dental prosthesis of the type comprising: a first element - in particular a male part - anchored to the pier tooth; a second element - in particular a female part - which is integral with the removable prosthesis; and an elastic retention system with a restraining member (spherical or of some other shape) which cooperates with a corresponding impression. According to the invention, the elastic retention system comprises a restraining member of a material having a certain degree of elastic give so as to constitute simultaneously both the component which comes into contact with a corresponding shaping of the element to be held, and also the component which generates the elastic effect.

The spherical restraining member is accommodated in a seat and held therein by projections which can be overcome with elastic deformations of the restraining body, which can thereby be easily replaced. When the restraining member is spherical, the said seat is cylindrical.

Advantageously, the two elements have (plane or curved) cooperating surfaces, across which the forces on the prosthesis are off-loaded onto the first element and hence onto the pier tooth.

When it is wished to produce a springy prosthesis, according to the invention the cooperating surfaces for dispersing the loadings are made curved in shape, to allow relative gliding and hence angular movements of the second element (and hence of the prosthesis) about a transverse (i.e. medio-distal) axis through the action of a loading exerted on the prosthesis and against an elastic reaction produced by the elastic restraining member; the two elements having plane lateral guide surfaces. Suitable shoulders will be provided to limit the angular swing of the second element and of the prosthesis.

The element anchored to the pier tooth - in practice the male one - has means providing a linkage to the corresponding female part integral with the prosthesis, which means comprise a first reaction surface for dispersing onto the pier the loadings exerted on the prosthesis, and a second shaped surface which is able to cooperate with elastic retention means to prevent the accidental unhitching of the prosthesis. Therefore the functions of restraint and load dispersal are performed by separate structural elements, so that the elasticity of the retention member is not felt by the loads dispersed from the prosthesis to the pier, while the stability of the prosthesis is not affected since the reaction surface guarantees correct positioning and sufficient stability of the prosthesis. It is obvious that - symmetrically - the female part of the attachment according to the invention comprises means providing a linkage with a first reaction surface so as to disperse the loads exerted on the prosthesis onto the male part, and a second surface able to cooperate with the elastic retention means which prevent the accidental unhitching of the prosthesis.

In short, the elastic member is enabled to function by the interference between the two seats, of the member itself and of the male part to be held.

The invention will be better understood by examining the description and the appended drawing, which shows a non-limiting practical example of the invention. In the drawing:
Figs. 1 and 2 show a first embodiment of the attachment, in a longitudinal section through I-I of Fig. 2 and in a transverse section through II-II of Fig. 1;
Figs. 3, 4 and 5 show the so-called female component in the section corresponding to that of Fig. 1 and in the views along IV-IV and V-V of Fig. 3;
Figs. 6, 7, 8 and 9 show the male component in a view corresponding to that of Fig. 1 and in the views along VII-VII, VIII-VIII and IX-IX of Fig. 6;
Figs. 10 and 11 show a second, rigid rather than elastic, embodiment in the longitudinal section through X-X of Fig. 11 and in the section through XI-XI of Fig. 10;
Figs. 12, 13 and 14 show in isolation the female component in the section corresponding to that of Fig. 10, in the section through XIII-XIII of Fig. 12 and in the view from the line XIV-XIV of Fig. 12;
Figs. 15, 16 and 17 show the male part in the view corresponding to that of Fig. 10 and in the views along XVI-XVI and XVII-XVII of Fig. 15;
Figs. 18 and 19 show two possible applications.

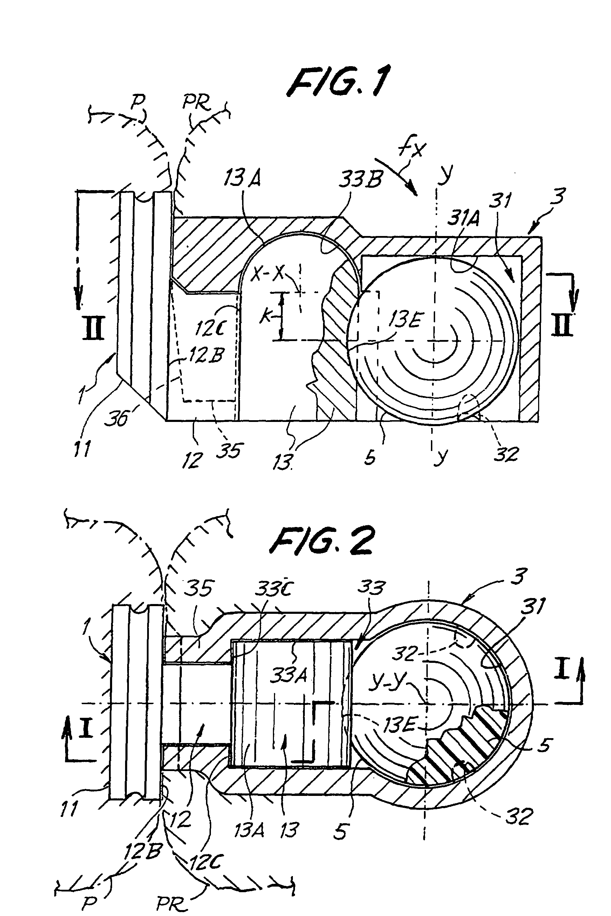

According to what is illustrated in the appended drawing and with particular initial reference to Figs. 1 to 9, a solution is illustrated in which the female part linked to the removable prosthesis gives elastically.

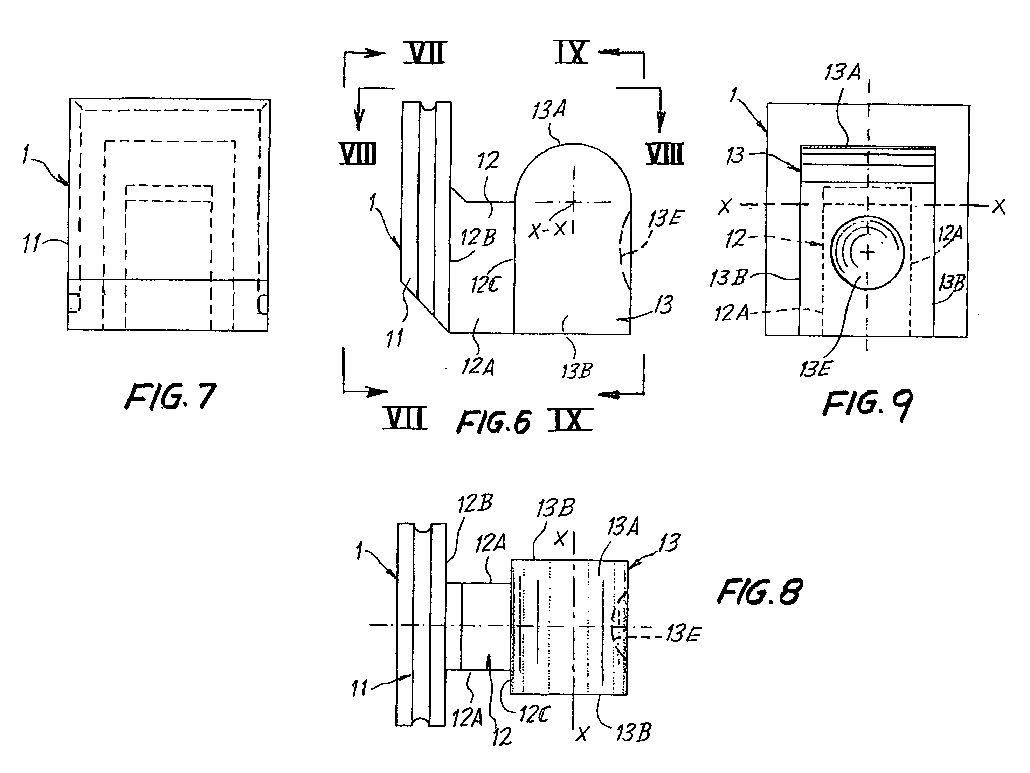

The male element, indicated as 1, is integral with the pier and is illustrated in isolation also in Figs. 6 to 8. Linkage to the pier is effected via a part 11 which is shaped with anchoring channels for this purpose. Indicated as 12 is a union part between the part 11 for stable anchoring to the pier and a part 13 which serves as the male part proper for the unfastenable coupling to the female element. The union 12 forms two opposite lateral channels 12A, the inner walls of which are longitudinal, the inner walls of the two channels being plane and mutually parallel. Each of the channels 12 has a bank 12B formed by the part 11 and a bank 12C formed by the part 13 constituting the male coupling element. This male element 13 characteristically has an upper reaction surface 13A which is shaped into a curve, in particular a near-semicircular curve, with axis X-X which is transverse and in the fitted implant extends in a medio-distal direction with respect to the dental arch. On its sides the part 13 forming the male part has two plane surfaces 13B parallel to the surfaces of the inner walls 12A of the lateral channels in the union 12 and hence surfaces which are mutually parallel and parallel to the longitudinal axis.

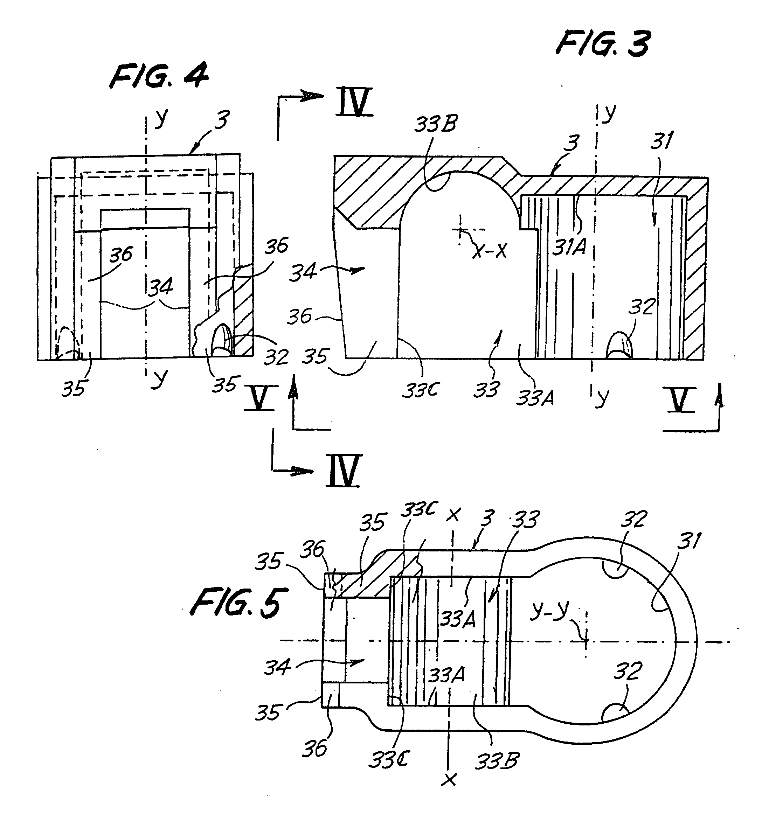

The female element of the attachment, illustrated in particular in Figs. 3 to 5, is indicated generically as 3; it forms a cylindrical seat 31 about the axis Y-Y which is closed by an upper surface 31A and is open below (looking at Figs. 1 and 3) and has at least two internal projections 32 in the region of the lower aperture. Next to the seat 31 is formed a prismatic housing 33, which has in particular plane surfaces 33A parallel to the axis of the assembly and hence orthogonal to the axis X-X; these surfaces 33A are the same distance apart as the surfaces 13B of the prismatic male element 13 of the element 1. The housing 33 is defined at the top by a near-semicylindrical, i.e. barrelled, surface 33B which corresponds to the surface 13A of the part 13 of the element 1. On the left side looking at Figs. 3 and 5, i.e. from the side opposite the seat 31, the housing 33 is defined by two stepped portions 33C and then the housing continues with a large opening 34 which is delimited by two flanks 35 shaped by the profile of the steps 33C internally and externally by external surfaces 36 which are slightly inclined downwards and inwards, when looking at Fig. 3. On the opposite side from the opening 34, the housing 33 interferes with the cylindrical seat 31 in the sense that the lateral walls 32A extend beyond the barrelled cylindrical surface 33B so as to interfere with the cylindrical surface of the seat 31. The semicylindrical barrelled surface 33B extends towards the seat 31, finishing up underneath the upper end surface 31A of the said seat 31.

As may be seen in particular in Figs. 1 and 2, a small sphere 5 can be accommodated in the seat 31, this sphere constituting the elastic restraining and elastic reaction member for spring-loading the prosthesis. The small sphere 5 is made from a suitable elastomer which is resistant to the acid environment of the oral cavity and is sufficiently elastic to offer elastic give, albeit relatively limited, for the purposes indicated below. The small sphere 5, which has a diameter equal to or only just less than that of the cylindrical wall of the seat 31, can through its own elasticity be inserted with some degree of force into the seat 31, overcoming the internal projections 32 provided in the said seat; these projections prevent the spontaneous escape of the small sphere 5 from the seat 31. This small sphere 5 projects laterally towards the housing 33 in the intermediate region of the latter. On the front of the prismatic part 13, underneath the curved surface 13A, the element 1 has a slight impression 13E, which has a spherical concave surface substantially corresponding in curvature and in a negative manner to the curvature of the sphere 5.

When the element 1 is inserted with the part 13 into the prismatic housing 33, so as to make the surfaces 13A and 33B couple, the impression 13E will correspond with the sphere 5 accommodated in the housing 31 and held therein by the projections 32, as clearly visible in Fig. 1. The prismatic part 13 of the component 1 becomes accommodated in the said prismatic housing 33 in such a way that the plane lateral surfaces 13B of the said part 13A come into gliding contact with the surfaces 33A of the prismatic housing 33 of the part 3. Again during assembly, the lateral flanks 35 of the element 3 are accommodated in the channels 12A; in particular the plane inner walls of the said channels 12A couple glidingly with the internal surfaces of the opening 34 which is delimited by the flanks 35. The flanks 35 being delimited by the two profiles 33C and 36, a certain angular play of the said flanks 35 is permitted inside the channels 12 as may clearly be appreciated by looking at Fig. 1. The angular movement - delimited in the aforesaid mode can take place around the axis X-X of the two surfaces 13A and 33B.

Considering in particular Figs. 1 and 2 it becomes clear that a coupling between the two elements 1 and 3, which occurs along the axis Y-Y and orthogonally to the axis X-X, when the small sphere 5 is accommodated in the seat 31, involves compression and elastic deformation of the small sphere 5 through the action of the semicylindrical surface 13A, until the prismatic part 13B passes the intermediate region, i.e. the equatorial region (with respect to the axis Y-Y) of the small sphere 5, its surface 13A finally contacting the surface 33B; having reached this position, the impression 13E now corresponds with the said equatorial region of the small sphere 5, which is thereby partially seated in the impression 13E and exerts a restraining action against accidental unhitching in the direction opposite to that stated above for the coupling together of the elements 1 and 3. With the element 3 being integral with the removable prosthesis, so too is the removable prosthesis held by the restraining effect produced by the small sphere 5 in the impression 13E in the element 1 fixed stably to the pier of the oral cavity. Only by overcoming this restraining effect can the prosthesis be unfastened from the element 1 integral with the pier.

It will be appreciated that the impression 13E and in the configuration shown in Fig. 1 the centre of the small sphere 5 are a distance K from the axis of rotation X-X between the surfaces 13A and 33B and hence from the axis of the give which may be exerted between the elements 3 and 1 through the play which the edges 36 and 33C of the flanks 35 exhibit with respect to the banks 12B and 12C of the channels 12A. As a consequence, the possibility of angular movement of the element 3 integral with the prosthesis along the arrow fₓ of Fig. 1 about the axis X-X, is possible only on condition that there is elastic compression of the small sphere 5, to which the impression 13E of the element 1 approaches in the inclination marked fX; this movement along the arrow fₓ is limited by the abutting of the edge 36 of the flanks 35 against the bank 12B of the channel 12A. With the cessation of the loading along fₓ on the prosthesis, the latter is brought back into the condition shown in Fig. 1 - i.e. with the stepped surfaces 33C brought back into contact with the banks 12C of the channels 12 - through the effect of the elastic reaction of distension of the small sphere 5, which reacts between its own seat and the impression 13E.

The result is both the possibility of unfastening and elastic restraining of the prosthesis with the female element 3 with respect to the pier with the male element 1, and also the possibility of limited elastic giving of the prosthesis and of the female element 3 along fₓ about the axis X-X and against the elastic reaction of the same single elastic element represented by the small elastomeric sphere 5.

The small sphere 5 can be easily removed and replaced in an extremely simple operation, once the prosthesis has been separated from the part fixed to the pier.

All of the forces which are to be offloaded from the prosthesis to the pier are transmitted from the element 3 of the prosthesis to the element 1 fixed to the pier across the supporting surfaces 33B and 13A, without intervention and without influence on the elastic component constituted by the small sphere 5.

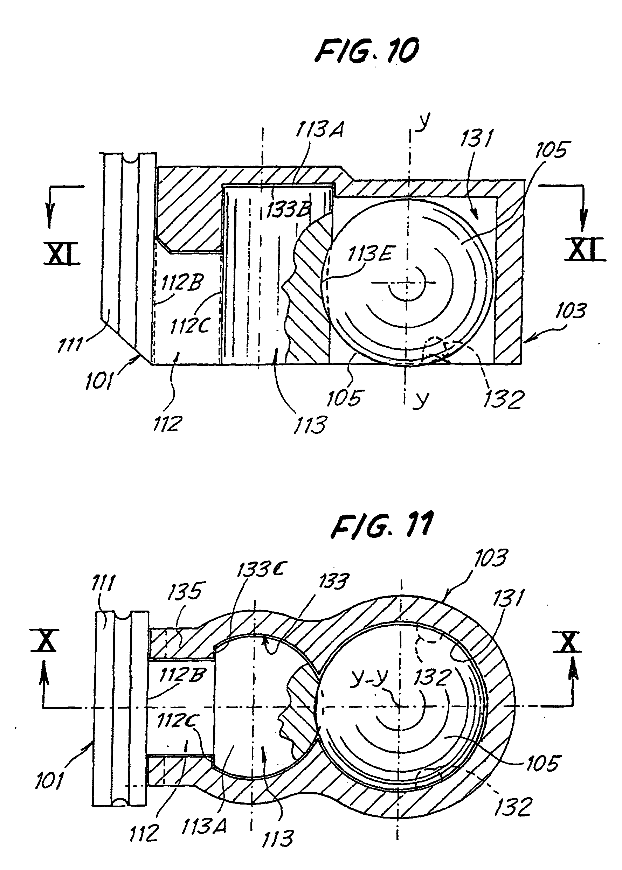

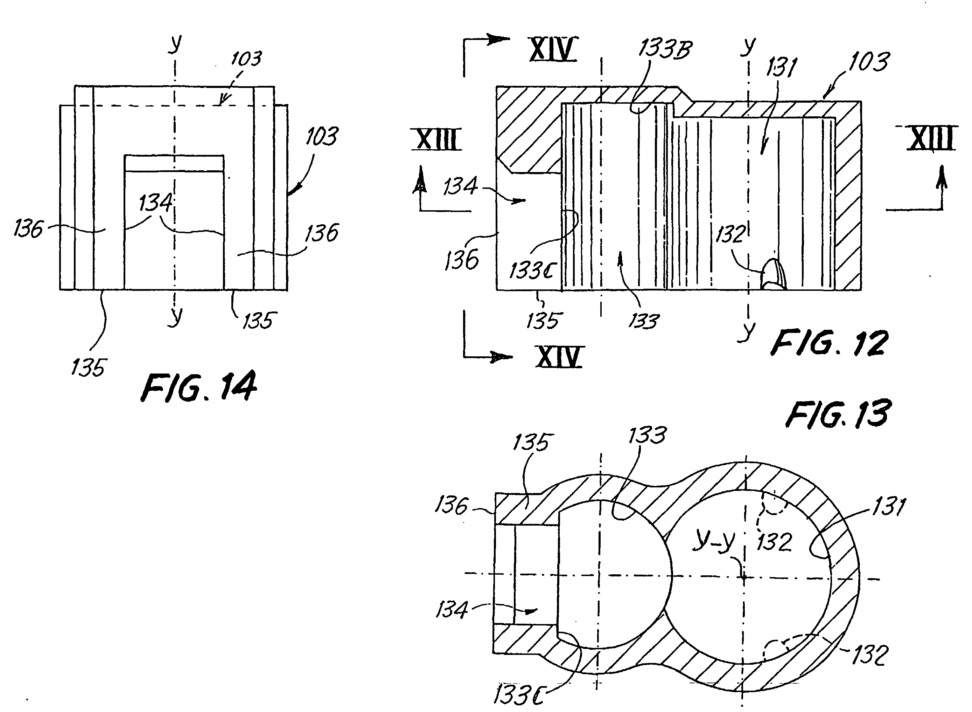

Represented in Figs. 10 to 17 is a solution wholly equivalent to that described above with the exception of the capability of limited elastic springing between the prosthesis and the part fixed to the pier, i.e. excluding the possibility of elastic give along fX about the axis X-X which was described with reference to Fig. 1.

The parts and the particulars of the solution of Figs. 10 to 17, which correspond to those of the previous example, are indicated by the same references with the addition of the number "100" and hence will not be described in detail, rather for greater clarity only the morphological differences in this example as compared with that of Figs. 1 to 9 are described.

The part 113, rather than having a prismatic section, i.e. with plane surfaces such as 13B, may have a cylindrical surface, although this is not indispensible. The upper surface of the part 113A is plane rather than having a convex semicylindrical curvature like 13A. Correspondingly the surface 133B of the housing for the male part 113 is plane so as to couple with the surface 113A, rather than having a semicylindrical concave curvature like 33B; the housing 133 can be shaped so as to accommodate the part 113 of cylindrical shape rather than prismatic shape. In this embodiment the flanks 135 - unlike those 35 - have a lateral profile 136 which is parallel to the step 133C and to the banks 112B, 112C rather than being inclined like the profile 36 of the flanks 35. Therefore the wings 135 plug in prismatically and without the possibility of angular play in the channels 112 (which on the contrary is provided for in the previous solution). In this example of Figs. 10 to 17, therefore, the prosthesis and the element 103 integral therewith can only be inserted and removed in a direction corresponding to that of the axis Y-Y, without the possibility of angular elastic play around a transverse or medio-distal axis X-X, and the forces will be transmitted from the prosthesis to the pier through the contact between the plane surfaces 133B and 113A. In other respects the operation is wholly equivalent to that already described in connection with the previous example.

In Figs. 10 to 17, therefore, the reaction surface of the male part can be constituted by the flat and external upper surface 113A of the pin 113, and of the joining plane between pin and plate with inclined rung. The elastic retentive system is obtained through the interference of the two cylindrical holes 133 and 131, one of which is the supporting element between male and female parts, and the other is the seat of the elastic element 105 which - by virtue of the interference between the said two holes - becomes compressed during insertion and returns to the rest state in the corresponding impression 113E.

The elastic element 5 and 105 can be of cylindrical shape (with corresponding rectangular cross-section of the seat 31 and 131) but more advantageously will be of spherical shape - as illustrated - which is more easily interchangeable.

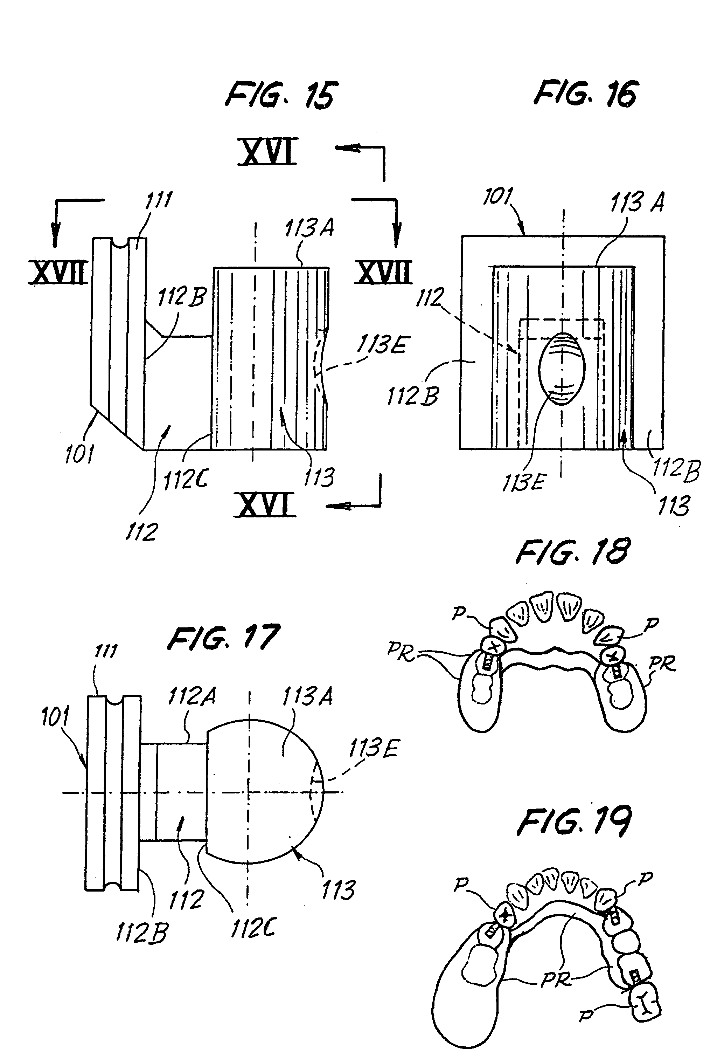

Figs. 18 and 19 show two possible embodiments, with piers P and prostheses PR.

It is understood that the drawing shows merely an example given solely as a practical illustration of the invention, it being possible for the invention to vary in forms and arrangements without however departing from the scope of the concept underlying the invention. For example, the same components are not excluded from being used for both the exemplary solutions, with small variants such as that of chamfering the wings 35 to obtain the possibility of pivoting, whereas without the chamfer 36 there remains a joint which is stable against pivoting; by extemporaneously varying the chamfer 36, it is possible to vary the maximum possible amplitude of the pivoting.

## Claims

1. An attachment for removable dental prosthesis, comprising a first male element (1; 101) anchored to a pier tooth (P) and a second female element (3; 103) which is integral with the removable prosthesis and an elastic retention member which is placed in the second female element 3; 103) and retains the first and second element by an elastic effect, **characterized in that** said retention member is a spherical restraining member (5; 105) which is made of a material having a certain degree of elastic give, is separated from said first element (1; 101) and from said second element (3; 103), is retained in a cylindrical seat (31, 131) of said second element (3; 103) and projects from its seat (31; 131) to cooperate with a corresponding impression (13E; 113E) of said first element (1; 101), so as to interfere with the first element (1; 101) and retain it by an elastic effect.

2. Attachment according to Claim 1, **characterized in that** the restraining member (5; 105) is held in its seat (31; 131) by projections (32; 132) which can be overcome with elastic deformations of the restraining body (5; 105), which can thereby be easily replaced.

3. Attachment according to at least one of the preceding Claims, **characterized in that** the two elements (1; 101, 3; 103) have cooperating surfaces (13A-33B; 113A-133B), across which the forces on the prosthesis are off-loaded onto the first element (1; 101) and hence onto the pier tooth.

4. Attachment according to Claim 3, **characterized in that** the said surfaces (13A-33B) are shaped so as to allow relative gliding and hence angular movements of the second element (3) and hence of the prosthesis about a transverse (medio-distal) axis (X-X) through the action of a loading exerted on the prosthesis and against an elastic reaction produced by the elastic restraining member (5); the two elements (1, 3) having plane lateral guide surfaces (13B; 33A)

5. Attachment according to claim 4, **characterized in that** it comprises shoulders (12B, 36; 12C, 33C) limting the angular swing of the second element (3) and of the prosthesis.

6. Attachment according to at least one of the preceding claims, **characterized in that** the seats (31, 33; 131; 133) exhibit reciprocal interference which secures retention.

## Patentansprüche

1. Geschiebe für entfernbare zahnärztliche Prothese, mit einem ersten, männlichen Element (1; 101), daß an einem Pfeilerzahn (P) verankert ist, und einem zweiten, weiblichen Element (3; 103) welches mit der entfernbaren Prothese verbunden ist, und einem elastischen Festhalteglied, das in dem zweiten, weiblichen Element (3; 103) angeordnet ist und das erste und zweite Element durch elastischen Effekt zusammenhält, **dadurch gekennzeichnet, daß** das Festhalteelement ein sphärisches Einklemmelement (5; 105) ist, welches aus einem Material mit einer bestimmten elastischen Nachgiebigkeit besteht, von dem ersten Element(1; 101) und dem zweiten Element (3; 103) getrennt ist, in einem zylindrischen Sitz (31; 131) des zweiten Elements (3; 103) aufgenommen ist und aus diesem Sitz (31; 131) vorsteht, um mit einer entsprechenden Vertiefung (13E; 113E) des ersten Elements (1; 101) zusammenzuwirken, um in das erste Element (1; 101) einzugreifen und es durch die elastische Wirkung festzuhalten.

2. Geschiebe nach Anspruch 1, **dadurch gekennzeichnet, daß** das Einklemmelement (5; 105) in seinem Sitz (31; 131) durch Vorsprünge (32; 132) gehalten ist, die bei elastischer Deformation des Einklemmkörpers (5; 105) überwindbar sind, welcher hierdurch leicht ausgewechselt werden kann.

3. Geschiebe nach mindestens einem der vorangegangenen Ansprüche, **dadurch gekennzeichnet, daß** die zwei Elemente (1; 101, 3; 103) zusammenwirkende Oberflächen (13A - 33B; 113A-133B) aufweisen, über die auf die Prothese wirkende Kräfte auf das erste Element (1; 101) und damit auf den Pfeilerzahn abgeleitet werden.

4. Geschiebe nach Anspruch 5, **dadurch gekennzeichnet, daß** die Oberflächen (13A - 33B) so geformt sind, daß sie eine relative Verschiebung und damit Winkelbewegungen des zweiten Elements (3) und damit der Prothese über eine (medio-distale) Querachse (X - X) zu ermöglichen unter der Wirkung einer auf die Prothese einwirkenden Belastung und gegen eine elastische Gegenwirkung des elastischen Einklemmelementes (5), wobei die beiden Elemente (1, 3) ebene seitliche Führungsflächen (13B; 33A) aufweisen.

5. Geschiebe nach Anspruch 4, **dadurch gekennzeichnet, daß** es Schultern (12B, 36; 12C, 33) aufweist, die den Winkelausschlag des zweiten Elements (3) und der Prothese begrenzen.

6. Geschiebe nach mindestens einem der vorangehenden Ansprüche, **dadurch gekennzeichnet, daß** die Sitze (31, 33; 131; 133) gegenseitig ineinandergreifen, was die Festhaltung gewährleistet.

## Revendications

1. Fixation pour prothèse dentaire amovible, comprenant un premier élément mâle (1 ; 101) ancré dans une dent pilier (P) et un second élément femelle (3 ; 103) qui est solidaire de la prothèse amovible et un élément de rétention élastique qui est placé dans le second élément femelle (3 ; 103) et retient les premier et second éléments par un effet élastique, **caractérisé en ce que** ledit élément de rétention est un élément de maintien sphérique (5 ; 105) fabriqué dans un matériau ayant un certain degré d'élasticité, est séparé dudit premier élément (1 ; 101) et dudit second élément (3 ; 103), est retenu dans un siège cylindrique (31, 131) dudit second élément (3 ; 103) et fait saillie de son siège (31 ; 131) pour coopérer avec une empreinte correspondante (13E ; 113E) dudit premier élément (1 ; 101), de manière à interférer avec le premier élément (1 ; 101) et à le retenir par un effet élastique.

2. Fixation selon la revendication 1, **caractérisée en ce que** l'élément de maintien (5 ; 105) est maintenu dans son siège (31 ; 131) par des saillies (32 ; 132) dont on peut venir à bout avec des déformations élastiques du corps de maintien (5 ; 105) qui peut ainsi être facilement remis en place.

3. Fixation selon au moins l'une des revendications précédentes, **caractérisée en ce que** les deux éléments (1 ; 101 ; 3 ; 103) ont des surfaces coopérantes (13A-33B ; 113A-133B), à travers lesquelles les forces exercées sur la prothèse sont déchargées sur le premier élément (1 ; 101) et donc sur la dent pilier.

4. Fixation selon la revendication 3, **caractérisée en ce que** lesdites surfaces (13A-33B) ont une forme permettant un glissement relatif et donc les mouvements angulaires du second élément (3) et donc de la prothèse autour d'un axe (X-X) transversal (médio-distal) sous l'action d'une charge exercée sur la prothèse et à l'encontre d'une réaction élastique produite par l'élément de maintien élastique (5) ; les deux éléments (1, 3) ayant des surfaces de guidage latérales planes (13B ; 33A).

5. Fixation selon la revendication 4, **caractérisée en ce qu'**elle comprend des épaulements (12B ; 36 ; 12C, 33C) limitant le basculement angulaire du second élément (3) et de la prothèse.

6. Fixation selon au moins l'une des revendications précédentes, **caractérisée en ce que** les sièges (31, 33 ; 131 ; 133) présentent une interférence réciproque qui assure la rétention.
